# EUROPEAN PATENT APPLICATION

(11) **EP 1 296 531 A1**
(43) Date of publication of application: **26.03.2003**
(21) Application number: 01660235.1
(22) Date of filing: 18.12.2001
(51) Int. Cl.: H04Q 7/38, G01S 5/02

(54) **Processing of subscriber paths for locating a mobile terminal in a mobile network**

(30) Priority: 21.09.2001 FI 20011865
(71) Applicant: Locus Portal Corporation, 00100 Helsinki (FI)
(72) Inventor: Tanskanen, Tapio, 00510 Helsinki (FI); Heinonen, Tero, 00300 Helsinki (FI)
(74) Representative: Savela, Antti-Jussi

(57) **Abstract**

The invention concerns locating mobile terminals in a mobile network. A location estimate is determined based on a parameter set received from the mobile network. In order to improve the accuracy of the system without a need for extensive prior field measurements or laborious data collection, a transition network is formed based on parameter sets. In said network an individual node represents a parameter set having a given parameter content, a link connecting two neighboring nodes represents a transition between two successive locations of a mobile terminal, and the position of a node relates to a certain geographical location. The transition network is then optimized by adjusting the positions of the nodes by means of the positions of their neighboring nodes and the movement within the network of some of the nodes is limited. The position of the node representing a parameter set received indicates the location of a mobile.

## Description

### Field of the invention

The present invention relates generally to location techniques. More specifically, the present invention relates to determination of the geographical location of a mobile (i.e. a mobile terminal) within a mobile network.

### Background of the invention

There are two major reasons that have given motivation and fueled the development of location determining techniques in mobile networks. First, different authorities set requirements for the location determination of mobile terminals. It is highly desirable that certain authorities, such as emergency call centers, can locate the calling party as accurately as possible. In many countries legislation sets requirements for such location methods. For example, in the USA mobile location to an accuracy of 50 meters for 67 percent of calls and 150 meters for 95 percent of calls will be mandatory in the near future for handset-based solutions. Second, many of the future services provided in mobile networks will be such that they require information about the current geographical location of the mobile terminal.

The greater the accuracy of a location method is, the better it can serve the application utilizing the location information. This applies especially to densely built urban areas where long-range visibility is not possible. The accuracy of the location methods is dependent on many different factors, such as radio propagation effects. This is a major reason why dense urban areas form a difficult and challenging environment in terms of location accuracy, with severe multipath characteristics and signal propagating with less attenuation along street canyons than through buildings.

One known method for accurately determining the location of a mobile terminal is the so-called Database Correlation Method (DCM). In this method, the signal information seen by a mobile terminal is stored in a database. Thus, prior to the commissioning of the location system a database is established, which includes location-dependent signal samples measured over the whole coverage area of the system. When the system has been taken into use and a mobile terminal is to be located, the terminal sends to a location server the location-dependent signal information it currently has. The server compares the signal information received to the content of the database and then retrieves the location corresponding to the signal sample having the best match with the signal information received.

A major drawback of this method is the extensive work required to maintain the database, i.e. the amount of field measurements required to obtain correct information in the database. This is further aggravated by the fact that the signal information is dependent on many different factors. Factors affecting the signal information include changes in the network configuration, new buildings being built, and snow falling on the ground, for example. It is therefore an overwhelming task to maintain correct signal samples in the database over a wide geographical area.

Another approach for accurately determining the location is to calculate the location based on a certain propagation-path model. In these models field measurements are needed only for the calibration of the model. However, these models require knowledge of many different characteristics of the buildings built on the area, such as height, width, thickness of walls, surface materials, etc. Therefore, collecting and maintaining a building database for the model easily becomes an insurmountable task.

A further problem related to current location methods is that due to human factors the information is sometimes incorrect as to the network configuration, which is needed for a location estimate. For example, in case of sectored antenna sites the information on the direction of an individual antenna can be incorrect or inaccurate, giving rise to an incorrect or inaccurate location estimate.

The objective of the invention is to eliminate the drawbacks described above and to bring about a solution which enables the accurate location of the mobile without laborious field measurements or models requiring laborious information collection and/or maintenance.

### Summary of the Invention

The objective of the present invention is to achieve a solution whereby the accuracy of the current location methods can be improved. Furthermore, the objective is to achieve a solution for accurate location results which does not require extensive prior field measurements or data collection.

The invention utilizes location-dependent parameters available from a mobile network for determining the location of the mobile terminal. As the network normally provides several parameters for a single measurement, the parameters relating to a single measurement are in this context denoted as a parameter set.

The idea of the invention is to create, based on the parameter sets received from the mobile network, a transition network comprising distinct nodes and internodal links, and to optimize the positions of the nodes within the network. The optimization includes defining the position of an individual node on the basis of the positions of its neighbors and limiting the movement of at least some of the nodes in order to keep the node movements in control.

In the transition network an individual node represents the parameter sets having a specified parameter content (specified parameter values), and its position relates to a certain location. A link connecting two neighboring nodes represents a transition between two successive locations of a mobile terminal. In the optimization phase of the present method, a new position is determined for an individual node on the basis of the positions of the nodes directly connected to said node through a link. When a mobile terminal is to be located and a parameter set is received from the network for this purpose, the new position of the node corresponding to the parameter set is used for positioning the mobile.

In the transition network each node includes information about the positions of the nodes *from* which mobiles have moved to said node and of the positions of the nodes *to* which mobiles have moved from the said node, i.e. each node represents an estimated transit point through which the mobiles pass. The idea underlying the invention is that the locations from which the mobile terminals have moved *to* a certain location and to which the mobile terminals have moved from said certain location give an accurate estimate of said certain location, and for this purpose data on said locations is collected, i.e. the transition network is created. The distance between the locations corresponding to two successive measurements cannot be long, especially if the locations are measured frequently, and therefore the neighboring nodes must be rather close to each other.

With the help of the invention, laborious steps can be avoided in connection with location determination, both in terms of prior field measurements and in terms of database maintenance. Instead, the data needed for the method can be collected from actual users of the network during the use of the network.

A further advantage of the invention is that errors and abnormalities in the radio parameters (i.e. parameter values which do not correctly indicate the location) and in the network database can be eliminated. An error or abnormality in the radio parameters can be caused by an abnormal reflection of the radio wave, and an error in the network database can be an incorrect direction value of an antenna, for example. Incorrect results due to such conditions can be eliminated, since the method of the invention is based on actual measurements.

A still further advantage of the invention is that it is not dependent on network implementation but can be applied to any network where at least one parameter dependent on the location of the mobile terminal is available. The present method can therefore be used on top of network implementations based on different location-dependent parameters.

A still further advantage of the invention is that it is most beneficial in areas where positioning service is most needed. This is because the accuracy of the method is greater, the higher the number of location measurements made.

Thus in one aspect the invention provides a method for locating mobile terminals in a mobile network, the method comprising the steps of:
receiving location-dependent parameter sets, each parameter set to include at least one parameter indicative of the location of an individual mobile terminal,
on the basis of the parameter sets, forming a transition network comprising nodes interconnected by links, wherein (1) an individual node represents a parameter set having a given parameter content, (2) a link connecting two neighboring nodes represents a transition between two successive estimated locations of a mobile terminal, and (3) the node coordinates relate to a certain location,
adjusting the coordinates of a node responsive to coordinates of neighboring nodes directly connected to said node through a link, whereby said adjusting is performed for at least some of the nodes of the transition network.
for a selected set of nodes, limiting movement of the node within the transition network, and
using the coordinates of the node representing a parameter set received to indicate a location estimate for said parameter set

The method may further provide for the forming step to include forming a single node representative of a plurality of parameter sets wherein the terminal coordinates indicated by said parameter sets having a relative displacement smaller than a predetermined limit. The forming step may include further linking between successive locations of one mobile terminal, whereby the nodes and links identifying said locations represent a path traveled by said one mobile terminal; and linking a plurality of paths to each other at nodes which represent parameter sets with being indicative of locations having a relative displacement smaller that a predetermined limit.

The adjusting step may be performed for a selected set of nodes of the transition network. The method may further comprise monitoring the movements of the nodes during the adjusting step, and repeating the adjusting step until the displacement of the nodes fulfills a predetermined condition. For example, until the largest displacement experienced by an individual node is below a preset threshold value. In an aspect of the invention, the adjusting step further comprises calculating the center of gravity of the neighboring nodes, and moving the node to the center of gravity obtained in the calculating step. Optionally, the method further includes calculating the center of gravity of the neighboring nodes, the center of gravity being calculated for each of the nodes representing the same parameter set. The center of gravity obtained in the determining step is used to indicate the location estimate for said parameter set.

Preferably, the limiting step includes updating positions obtained in said adjusting step, whereby the updated positions are used for finding the location estimate. The limiting step may further include keeping at least one of the nodes in a fixed position.

Optionally in the adjusting step, the neighboring nodes are adapted to effect the position of a node in a manner which is dependent on the path to which the neighboring nodes belong.

In another aspect, the invention provides for a system for locating mobile terminals in a mobile network, the system comprising:
first means for receiving parameter sets, each parameter set comprising at least one parameter indicative of the location of an individual mobile terminal,
second means for finding a location estimate for a parameter set received, the location estimate indicating the location of the respective mobile terminal,
third means for forming a transition network on the basis of the parameter sets, the transition network comprising nodes interconnected by links, whereby (1) an individual node represents a parameter set having a given parameter content, (2) a link connecting two neighboring nodes represents a transition between two successive locations of a mobile terminal, and (3) the node coordinates relates to a certain location,
fourth means for adjusting the coordinates of a node by means of the coordinates of the nodes directly connected to said node through a link, and
fifth means for limiting the movement of at least one of the nodes within the transition network,
wherein the second means are adapted to use the coordinates of the node representing a received parameter set to indicate the location estimate for said parameter set.

As the invention may be easily utilized on a computer, another embodiment of the invention comprises a computer readable media containing software that when executed by a computer will cause said computer to substantially perform the steps of the method, or cause the the computer to facilitate the system described herein.

### Brief Description of the Drawings

In the following, the invention and its preferred embodiments are described more closely with reference to the examples shown in Figures 1 to 11 in the accompanying drawings, wherein:
- FIG. 1: illustrates the location-dependent information available from a typical cellular network utilizing omni cells.
- FIG. 2: illustrates the location-dependent information available from a typical cellular network utilizing sectored cells.
- FIG. 3: illustrates a system in accordance with one embodiment of the present invention.
- FIG. 4: illustrates a first embodiment of the transition network formed in a method of the invention.
- FIG. 5: illustrates the initial position of each node in the network of FIG. 4.
- FIG. 6a-6d: illustrate the adjusting of node positions in the first embodiment of the transition network.
- FIG. 7: illustrates a second embodiment of the transition network of the invention.
- FIG. 8a-8d: illustrate the adjusting of node positions in the second embodiment of the transition network.
- FIG. 9a-9d: illustrate the links relating to the nodes whose positions are adjusted in FIG. 8a-8d.
- FIG. 10: illustrates the general process according to one aspect of the invention.
- FIG. 11: is a flow diagram illustrating an example of optimization of the transition network.

### Detailed Description of the Invention

As mentioned above, the method of the invention applies to various kinds of location-dependent information. According to the cellular system in question, the location-dependent information provided by the network can be signal strength or signal delay, for example. The determination of the location in current cellular networks is widely based on the Timing Advance value, because the Timing Advance value is directly available from the network. Therefore, Timing Advance is in this context used as an example of the location-dependent signal information available from the mobile network for location determination.

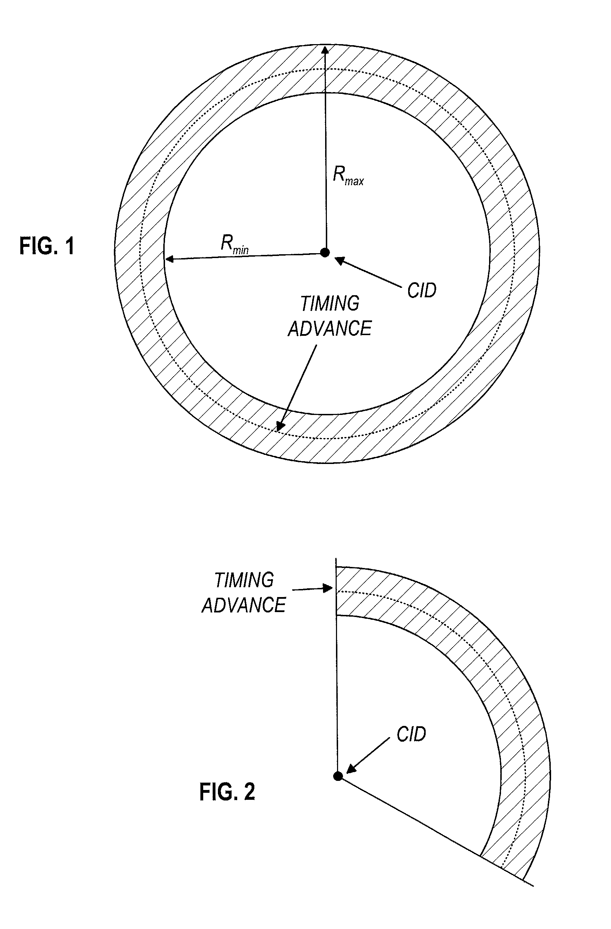

As is known, Timing Advance indicates how far from the base station the mobile most probably is located. FIG. 1 illustrates the location dependent information provided by a network with omni-directional base station antennas, whereas FIG. 2 illustrates the same in connection with sectored cell sites. The network typically provides the Timing Advance information as the minimum and maximum distance from the antenna (Rₘᵢₙ and Rₘₐₓ), in which case with a certain probability the mobile terminal is located between these limits, i.e. the hatched area A in the figures forms the Timing Advance zone defined by said limits. In addition to the Timing Advance information, the network provides the cell identifier CID, which identifies the cell where the mobile terminal is located. This information can be given as the coordinates of the cell site. The network further provides an identifier for identifying the mobile terminal in question from among the other mobile terminals, and a time stamp indicating the moment of location measurement. In case of a sectored cell the network also provides the sector information. Thus, for each location determination the network provides a parameter set which commonly includes the following information: cell identifying data, such as the coordinates of the Base Transceiver Station, Timing Advance information, such as Rₘₐₓ and Rₘᵢₙ, an identifier for identifying the mobile terminal in question from among the other mobile terminals, a time stamp indicating the moment of the location measurement, and optionally the sector information.

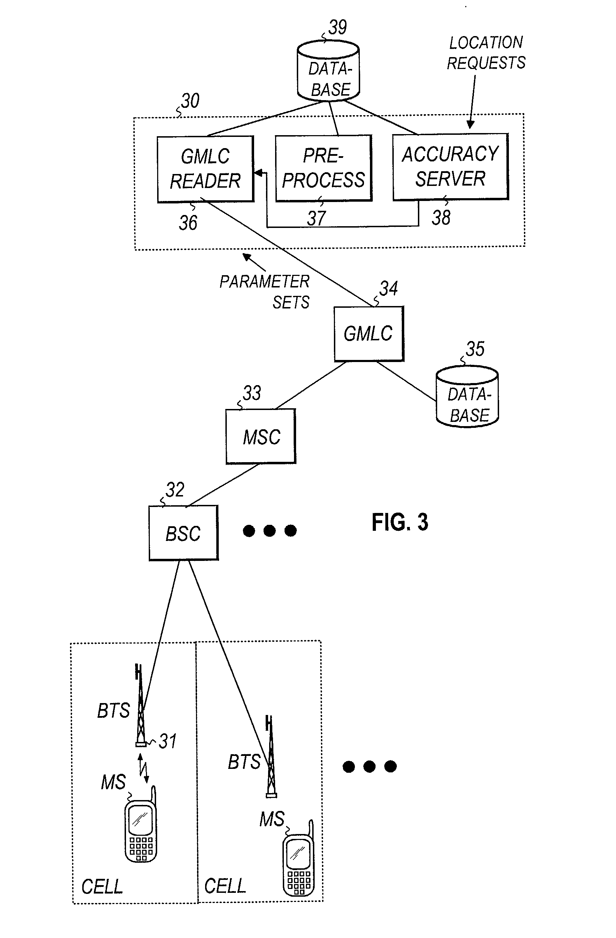

FIG. 3 illustrates the key elements of the system according to the present invention. It is assumed here that the mobile network is a GSM Public Land Mobile Network. Communication between the network and a mobile terminal MS in a cell takes place via a radio path by way of a Base Transceiver Station (BTS) 31. The Base Transceiver Stations are connected to Base Station Controllers (BSC) 32. Several Base Transceiver Stations are usually under the control of one BSC, and several Base Station Controllers are connected to one Mobile Switching Centre (MSC) 33, which carries out the main switching functions of the mobile network. In addition, the MSC connects the mobile network with external networks. For positioning purposes, the MSC is connected to a Gateway Mobile Location Center (GMLC) 34, which collects mobile positioning information into a positioning database 35. As mentioned above, it is assumed in this context that the GMLC supports the Cell ID and the Timing Advance. This means that for each location determination the GMLC provides a parameter set, including the parameters discussed above in connection with FIG. 1 and 2.

To illustrate the method of the invention, let us now assume that location measurement is performed for a certain group of mobile terminals, for example, for 1000 terminals. It is further assumed that the location of a terminal is measured at predetermined intervals, and that several such measurements are taken. By way of example, the location of each terminal is measured every 15 seconds, and a period of 30 minutes is used to generate 120 parameter sets per terminal. Thus, for each terminal the GMLC provides a parameter set discussed above at intervals of 15 seconds.

The parameter sets available from the mobile network are processed in a location determination system 30, including a GMLC reader 36, a pre-process unit 37, an accuracy server 38, and an accuracy database 39. The GMLC reader collects the parameter sets from the GMLC. This occurs typically via a data network, such as the Internet, since the GMLC reader is not necessarily directly connected to the GMLC. The GMLC reader stores the collected parameter sets in the accuracy database 38. In a preferred embodiment of the invention, the GMLC reader can filter the parameter sets received so that only one out of several similar parameter sets is stored in the database. Utilizing the time stamps, the GMLC reader stores the parameter sets of each mobile terminal as linked lists in which each parameter set refers to a preceding parameter set and to the next parameter set, except that the first one refers only to the next and the last one only to the preceding parameter set.

Using the above example, there are now 1000 linked lists in the accuracy database, each list presenting the measurement results for one of the mobile terminals. The pre-process unit then uses this information in order to form a transition network comprising nodes and links. In the following two implementations of the transition network comprising nodes and links is discussed. To facilitate the comprehension of the invention, an embodiment where only one node is created for all parameter sets having essentially the same content is discussed first.

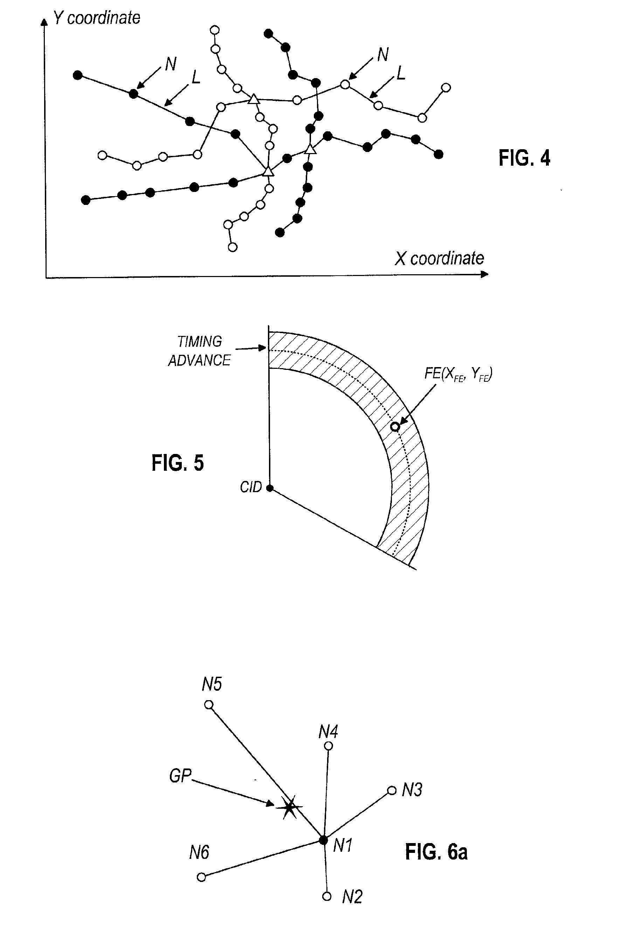

In this first embodiment an individual node of the transition network represents the parameter sets which equal one another with a given accuracy. The pre-process unit creates new database objects, called nodes, of the parameter sets, so that all parameter sets having essentially the same content are presented as a single node in the transition network. A link connecting two neighboring nodes represents a transition between two successive locations of a terminal, i.e. a link is created between two successive parameter sets of a terminal, which are different to each other. One chain of links therefore represents the path of an individual terminal, and the pre-process unit can create the transition network by creating a chain of nodes for each terminal, one terminal at a time. During this process the chains intersect at some nodes, whereby a transition network is created. The network shown in FIG. 4 thus comprises nodes N as well as links L connecting the nodes to each other. When the process discovers that a chain goes through an already existing node, it adds two pointers to the node, i.e. pointers to the new neighboring nodes, provided that said pointers do not exist already. As a result, each node of the transition network includes pointers to all nodes adjacent to it, i.e. to all nodes which are at a distance of one link from it.

For each of the nodes a preliminary location is also determined on the basis of the information related to the node. On the basis of the coordinates of the cell, the Timing Advance information, and possibly also on the basis of the sector information, the pre-process unit calculates a first estimate for each node. The first estimate is preferably located in the middle of the area indicated by the node information. FIG. 5 illustrates the location of the first estimate FE in the middle of a plot limited by the node information. Consequently, each node in the database now includes the coordinates of the first estimate, denoted with X_{FE} and Y_{FE}, whereby a network according to FIG. 4 is obtained.

After this, the pre-process unit calculates a new estimate for each node and replaces the first estimate by said new estimate. This process is described below. At this stage the sector information may be discarded, i.e. it is not used any more for the new estimate.

In order to illustrate the calculation of the new position of a node, FIG. 6a...6d show the said one node N1 of the network, together with its neighboring nodes N2-N6. First, the process calculates the center of gravity of the neighboring nodes and moves the node in question to the calculated center of gravity. In these specifications, the term 'center of gravity' is used loosely to indicate a weighed average of a plurality of points, or equivalently nodes, within a coordinate space. In addition to spatial coordinates, the points may carry additional information, such as level of confidence, number of iterations the point coordinates has been adjusted, or any other such parameter to be weighed while calculating an 'average' center of gravity that will yield more accurate position estimates. For example, if no such additional parameters are provided, the 'center of gravity' of such set is an average of the point set. If however other parameters are provided, those parameters may be considered in a manner somewhat similar to generating a center of gravity of an object. Thus the desirable addition of such parameters allows the determination of a point representative of the total combined importance weight of the plurality of nodes. It will be clear to those skilled in the art that many such parameters and methods of derivation of an 'average' point are known. Thus the choice of appropriate parameters, parameter sets, or calculation methods, is a matter of technical choice.

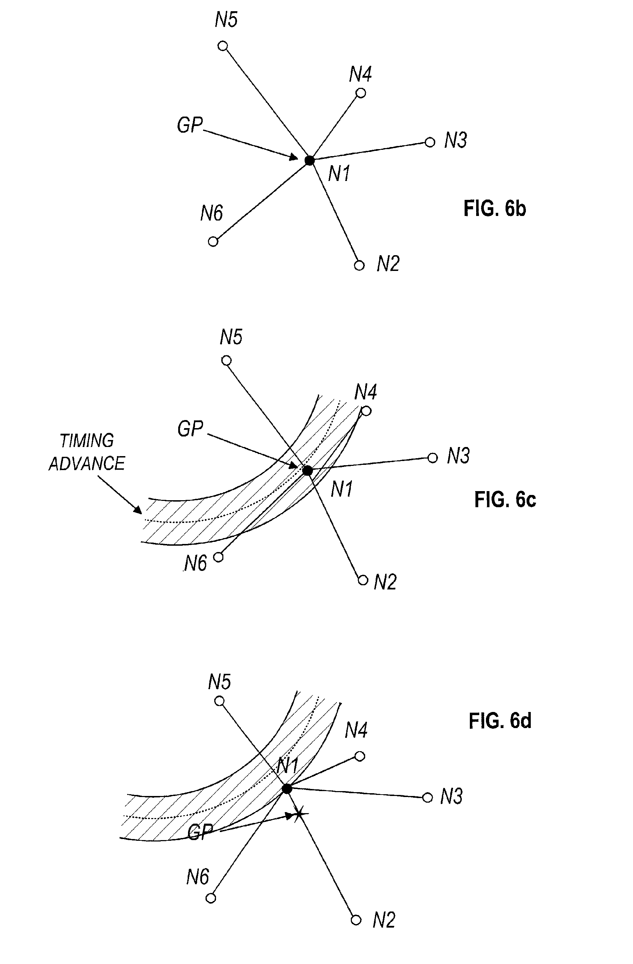

Supposing that the center of gravity of nodes N2-N6 is at point GP (FIG. 6a), node N1 is then moved to point GP (FIG. 6b). After this, based on the information relating to the node, the process checks whether the new position of the node, i.e. the gravity point, is in an area allowable in view of the information received from the mobile network. As the Timing Advance information is in this case the information determining the boundaries of the allowable area, the process checks whether the center of gravity is within the Timing Advance zone. In the affirmative case (FIG. 6c) the center of gravity GP is the new estimate of the node. In the opposite case (FIG. 6d), the node is moved from the center of gravity to the area determined by the Timing Advance information. In this connection, the node is preferably forced to move to the nearest limit of the allowable area determined by the Timing Advance information. In other words, if the node is beyond the Timing Advance zone as seen from the cell site, it is forced to move to the nearest intersection of the Timing Advance zone and a line passing through the center of gravity and the cell site. On the other hand, if the node is between the cell site and the Timing Advance zone, it is forced to move to the nearest intersection between the Timing Advance zone and the extension of the line passing through the center of gravity and the cell site.

In the above example, the position of the node was determined on the basis of the center of gravity of the neighboring nodes. The mechanism through which the neighboring nodes affect the position of a node can vary. The center of gravity can be determined by arithmetic or geometric averages, for example, by calculating the arithmetic or geometric average separately for each of the coordinates. Furthermore, it is possible to use different weights for the different neighboring nodes and/or take the position of the node into account when adjusting its position.

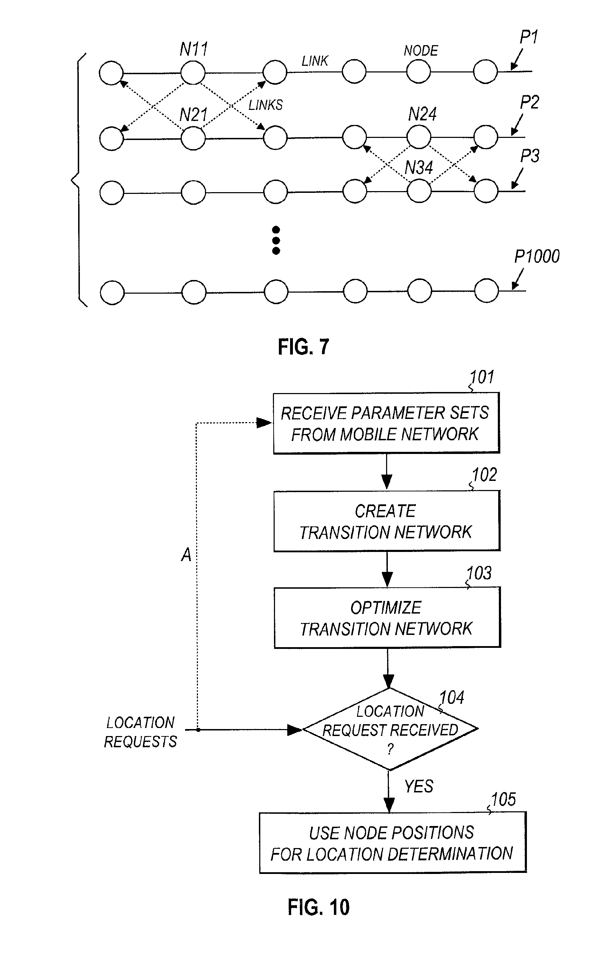

In the above-referred second embodiment the pre-process unit does not form a single node for all parameter sets having the same values but leaves the paths separate, in which case a certain parameter set is represented by several nodes, each belonging to a different path. Thus, in this case each of the nodes marked by a triangle in FIG. 4 is not stored as a single node, but rather as a node group in which each node belongs to a different path. Using the above example, FIG. 7 illustrates the logical content of the accuracy database in the second embodiment. The database includes separate paths P1...P1000, each comprising several nodes. If two nodes, such as nodes N11 and N21, represent the same parameter set, links (pointers) are created from each of said nodes to the neighboring nodes of all the other nodes representing the same parameter set. Thus, each node can include two types of links, those linking the node to the neighboring nodes in the same path and those linking the node with the neighboring nodes of the other nodes representing the same parameter set as the node itself. Although the database now includes redundancy, this redundancy can be utilized for improving the accuracy of the system. This is carried out by giving the links different weights depending on in which path they belong.

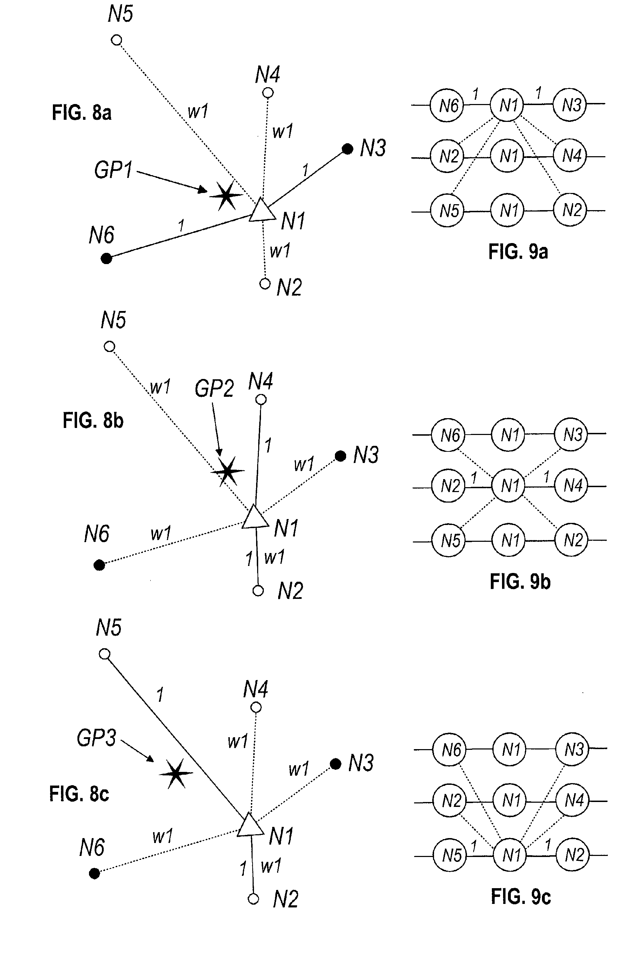

Using the example of FIG. 6a, FIG. 8a-8c illustrate the calculation of the center of gravity in the second embodiment. As there are three nodes N1 in this example, three different centers of gravity are obtained. FIG. 8a illustrates the calculation of the center of gravity when the path from node N6 to node N3 is involved, FIG. 8b illustrates the said calculation when the path from node N2 to node N4 is involved, and FIG. 8c illustrates said calculation when the path from node N2 to node N5 is involved. Generally, K centers of gravity are obtained, K being the number of nodes representing the parameter set, and also the number of paths including a node representing the parameter set in question. In the second embodiment the adjusted positions of of the three nodes N1 are then the centers of gravity GP1, GP2, and GP3, as calculated for each of said nodes.

FIG. 9a-9d illustrate the links of the nodes whose positions are adjusted in FIG. 8a-8d. As can be seen, there are three nodes N1 in the accuracy database, each including six links to the neighboring nodes.

As mentioned above, the links can be weighted differently during the adjusting step. In the examples of FIG. 8a, 8b and 8c, a link belonging to the path in question has a value of one, while the other links have a weight value w1 which is preferably between one and zero. In this way certain paths can be weighted with respect to the others. The weights can be determined statistically. For example, if a certain path is more probable than the others, the link leading to that direction can be weighted more than the others. The weight values can also be link-specific.

When a mobile is to be located in connection with a location request, the location is determined on the basis of the adjusted positions of the nodes representing the parameter set in question. One alternative is to calculate the center of gravity for the adjusted positions GPi (where i=1...j and j equals to the number of nodes corresponding to the parameter set), said center being an estimate for the location of the mobile. Various rules are possible for determining the location, and it is possible to have different weights for the positions of different nodes.

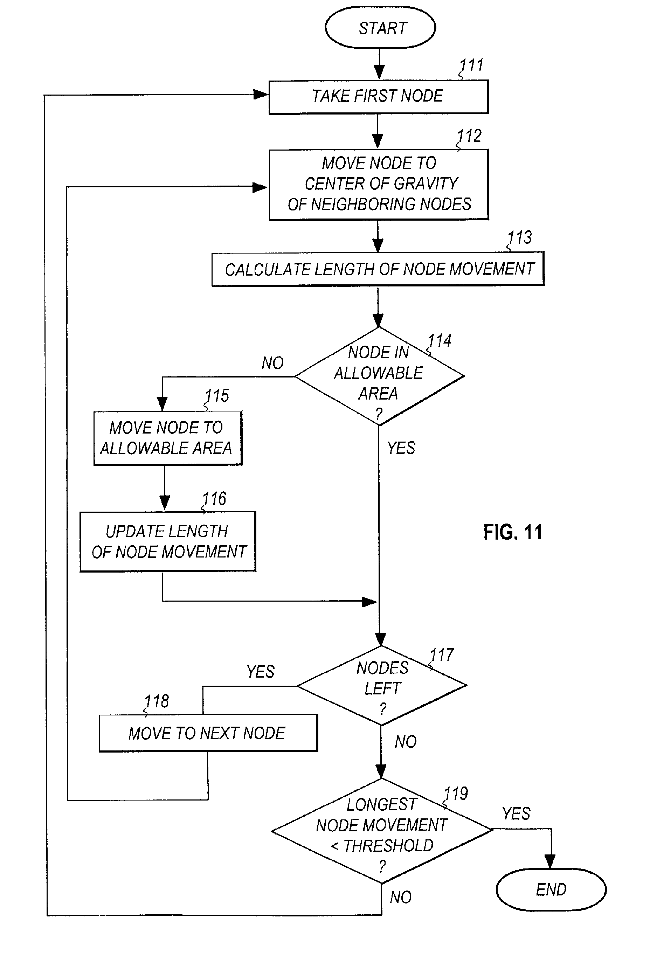

FIG. 10 is a flow diagram illustrating the general principle according to the invention. First, a sufficient number of parameter sets are collected at step 101, which can take place as a separate measurement phase prior to commissioning of the system or during the use of the system. When the parameter sets have been collected, the transition network is created by forming distinct nodes of the parameter sets. The network is then optimized by calculating new positions for the nodes (step 103). When a balanced network has been found, the node positions are used to determine the location of the mobile in response to an actual location request received (step 105). The parameter sets received in connection with actual location requests can be used to maintain an optimized network, as denoted by a broken line A. The accuracy server 38 (FIG. 3) receives the location requests from various applications. In response to a location request, it commands the GMLC reader to retrieve a parameter set from the mobile network. When the parameter set is received, the corresponding node is determined, the position of the node indicating the location of the terminal.

FIG. 11 is a flow diagram illustrating an example of the optimization process 103, i.e. the process of finding a balanced transition network, during which the steps illustrated in FIG. 6a to 6d are repeated several times. When the center of gravity for the neighboring nodes of the first node has been determined, and the first node has been moved to this point (step 112) from its original position (i.e. from the first estimate X_{FE}, Y_{FE}), the process calculates the length of the movement of the node (step 113). If it is then detected at step 114 that the node is not within the allowable area, it is forced to move to the allowable area (step 115) and the total movement of the node is calculated (step 116), i.e. the distance between the original position and the forced position. After this, or if the node is already in an allowable area, it is tested whether there are nodes left in the transition network (step 117). If this is the case, the process selects the next node and returns to step 112 to calculate the center of gravity for its neighboring nodes. After all the nodes of the transition network have been processed in the above manner, the process detects at step 117 that there are no nodes left in the transition network. In response to this, the process jumps to step 119 to decide whether the network is now balanced or whether one or more new iterations of calculation are still needed in order to obtain a balanced network. For the decision-making the process compares the lengthiest movement experienced by a single node to a predetermined threshold. If this movement is shorter than the threshold, the process decides that a balanced transition network has been obtained and stops the process. In the opposite case the process starts a new iteration during which new node positions are calculated on the basis of the positions obtained during the preceding iteration. A new iteration is started as long as the lengthiest node movement occurring during the preceding round exceeds the predetermined threshold.

As is obvious from the above examples, the position of each node is optimized by means of the neighboring nodes. In addition to this, the movement within the transition network of at least one of the nodes must be restricted in order to prevent the nodes from converging towards a single point in the network. This can be performed by using the geometrical limitations which define the area where the mobile has to be and thus also define the limits for the movement of a node. The use of the Timing Advance zone, illustrated in FIG. 6d, is one example of the use of a geometrical limitation for restricting the movement of the node. The parameter set typically includes one or more parameters, which can be used for generating the geometrical limitations. However, the node movement can be restricted in other ways as well. For example, some of the nodes can have fixed positions, whereby the above-referred convergence is not possible. For example, some of the outermost nodes of the transition network can be fixed, with their location being calibrated by a suitable calibration mechanism, such as the GPS system. It may also be possible to have a built-in restriction in the formulas according to which the neighboring nodes move the node. Thus, the effect of the above step 115 can be achieved through various alternative means.

The method has been described above in connection with a mobile network providing the location-dependent data in the form of Timing Advance information. However, as also mentioned above, the invention is not dependent on the network implementation but can be applied to any mobile network from which at least one parameter dependent on the location of the mobile is available. The present method can therefore be used with of network implementations based on different location-dependent parameters. Thus, the transition network can be formed in the above manner if the measured signal strength of the serving cell and its neighbors represent the location-dependent data or if the GMLC supports the E-OTD (Enhanced Observed Time Difference) positioning method, for example. Depending on the system, the parameters on which the geometrical limitations are based can vary, and the said limitations can be formed in different ways. In the E-OTD positioning method, a group of hyperbolas form the geometrical limitations.

Depending on the parameters provided by the mobile network, several parameter sets can be clustered into a single node, and depending on the resolution desired, the clustering can be performed with different criteria. In case of the Timing Advance information, each parameter set different from the other parameter sets preferably maps to a node of its own, i.e. clustering is not performed

Although the invention was described above with reference to the examples shown in the appended drawings, it is obvious that the invention is not limited to these, but may be modified by those skilled in the art without departing from the scope and spirit of the invention. For example, the parameter sets can be received from any network entity having access to them. Furthermore, the optimization can be performed for one sub-network only or for one sub-network at a time. It is also possible to distribute the steps in the method among different network elements.

## Claims

1. A method for locating mobile terminals in a mobile network, the method comprising the steps of:
receiving location-dependent parameter sets, each parameter set to include at least one parameter indicative of the location of an individual mobile terminal;
on the basis of the parameter sets, forming a transition network comprising nodes interconnected by links, wherein (1) an individual node represents a parameter set having a given parameter content, (2) a link connecting two neighboring nodes represents a transition between two successive estimated locations of a mobile terminal, and (3) the node coordinates relate to a certain location;
adjusting the coordinates of a node responsive to coordinates of neighboring nodes directly connected to said node through a link, whereby said adjusting is performed for at least some of the nodes of the transition network;
for a selected set of nodes, limiting movement of the node within the transition network, and
using the coordinates of the node representing a parameter set received to indicate a location estimate for said parameter set.

2. The method as defined in claim 1, wherein the forming step includes forming a single node representative of a plurality of parameter sets wherein the terminal coordinates indicated by said parameter sets having a relative displacement smaller than a predetermined limit.

3. The method as defined in claim 1, wherein the forming step further comprises:
linking between successive locations of one mobile terminal, whereby the nodes and links identifying said locations represent a path traveled by said one mobile terminal; and
linking a plurality of paths to each other at nodes which represent parameter sets with being indicative of locations having a relative displacement smaller that a predetermined limit.

4. The method as defined in claim 1, wherein the adjusting step is performed for a selected set of nodes of the transition network.

5. The method as defined in claim 1, further comprising:
- performing said adjusting step for a selected set of nodes of the transition network;
- monitoring the movements of the nodes during the adjusting step; and,
- repeating said adjusting step until the displacement of the nodes fulfills a predetermined condition.

6. The method as defined in claim 5, wherein said adjusting step is repeated until the largest displacement experienced by an individual node is below a preset threshold value.

7. The method as defined in claim 1, wherein the limiting step includes updating positions obtained in said adjusting step, whereby the updated positions are used for finding the location estimate.

8. The method as defined in claim 1, wherein the limiting step includes keeping at least one of the nodes in a fixed position.

9. The method as defined in claim 3, wherein in the adjusting step, the neighboring nodes are adapted to effect the position of a node in a manner which is dependent on the path to which the neighboring nodes belong.

10. The method as defined in claim 2, wherein the adjusting step further comprises:
calculating the center of gravity of the neighboring nodes and
moving the node to the center of gravity obtained in the calculating step.

11. The method as defined in claim 3, wherein the adjusting step further comprises:
calculating the center of gravity of the neighboring nodes, the center of gravity being calculated for each of the nodes representing the same parameter set; and,
said using step includes determining the center of gravity for the centers of gravity obtained in the calculation of the adjusting step, whereby the center of gravity obtained in the determining step is used to indicate the location estimate for said parameter set.

12. A system for locating mobile terminals in a mobile network, the system comprising:
first means for receiving parameter sets, each parameter set comprising at least one parameter indicative of the location of an individual mobile terminal,
second means for finding a location estimate for a parameter set received, the location estimate indicating the location of the respective mobile terminal,
third means for forming a transition network on the basis of the parameter sets, the transition network comprising nodes interconnected by links, whereby (1) an individual node represents a parameter set having a given parameter content, (2) a link connecting two neighboring nodes represents a transition between two successive locations of a mobile terminal, and (3) the node coordinates relate to a certain location,
fourth means for adjusting the coordinates of a node by means of the coordinates of the nodes directly connected to said node through a link, and
fifth means for limiting the movement of at least one of the nodes within the transition network,
wherein the second means are adapted to use the coordinates of the node representing a received parameter set to indicate the location estimate for said parameter set.

13. A computer readable media containing software that when executed by a computer will cause said computer to substantially perform the steps of claim 1.
